# FASCICULE DE BREVET EUROPEEN

(11) **EP 4 604 491 B1**
(45) Date de publication et mention de la délivrance du brevet: **02.09.2026**
(21) Numéro de dépôt: 25157710.2
(22) Date de dépôt: 13.02.2025
(51) Int. Cl.: H04L 67/02, H04L 67/568

(54) **CACHE DYNAMIQUE POUR L'ACCÈS À UN SERVICE WEB DEPLOYÉ SUR UN SERVEUR À TRAVERS UN RÉSEAU DE TÉLÉCOMMUNICATION**
DYNAMISCHER CACHE FÜR DEN ZUGRIFF AUF EINEN SERVER-WEBDIENST ÜBER EIN TELEKOMMUNIKATIONSNETZ
DYNAMIC CACHE FOR ACCESSING A WEB SERVICE DEPLOYED ON A SERVER THROUGH A TELECOMMUNICATION NETWORK

(30) Priorité: 14.02.2024 FR 2401430
(43) Date de publication de la demande: 20.08.2025
(73) Titulaire: Orange, 92130 Issy-les-Moulineaux (FR)
(72) Inventeur: GASTE, Olivier, 92326 CHATILLON CEDEX (FR); MARCHAND, Hervé, 92326 CHATILLON CEDEX (FR)
(74) Mandataire: Regimbeau

(56) Documents cités:
- ANONYMOUS: "Increasing Application Performance with HTTP Cache Headers | Heroku Dev Center", 24 December 2023 (2023-12-24), XP093191590, Retrieved from the Internet <URL:https://web.archive.org/web/20231224155948/https://devcenter.heroku.com/articles/increasing-application-performance-with-http-cache-headers> [retrieved on 20240731]
- ANONYMOUS: "Cache-Control - HTTP | MDN", 5 February 2024 (2024-02-05), XP093191596, Retrieved from the Internet <URL:https://web.archive.org/web/20240205173018/https://developer.mozilla.org/en-US/docs/Web/HTTP/Headers/Cache-Control> [retrieved on 20240731]

## Description

### DOMAINE TECHNIQUE

La présente invention est relative au téléchargement depuis un serveur vers un client de télécommunication d'une page web référençant un ensemble d'éléments devant être dynamiquement déterminés. Elle s'applique particulièrement aux pages web d'applications web pouvant faire face à des pics de trafic importants, telles que les applications de type « web TV ».

Une application de type Web TV vise à offrir les services habituels d'une télévision connectée depuis un navigateur pouvant se connecter à un site web. Un utilisateur d'un ordinateur ou de tout dispositif de télécommunication (de type tablette numérique, smartphone, etc.) peut ainsi se connecter à l'application « web TV » et visualiser un programme audio ou audio-vidéo choisi via son navigateur.

Les applications de type « web TV » visent ainsi à offrir un bouquet de contenus audio et/ou vidéo à des utilisateurs, ces contenus pouvant être diffusés en direct (ou « *live streaming* » en anglais) ou en différé sous la forme de vidéos à la demande.

Une telle application peut agréger des contenus de sources différentes.

L'offre de contenus peut varier au cours du temps, notamment du fait que par nature les contenus audio-vidéos sont liés à l'actualité, mais aussi parce que les fournisseurs de contenu peuvent faire évoluer leur offre de façon régulière pour des raisons marketing.

Également, l'offre de contenus peut varier en fonction des utilisateurs. Ceux-ci peuvent être enregistrés auprès de l'application et avoir accès à des contenus qui peut ainsi dépendre de leur profil, y compris de chaînes ou bouquets auxquels ils ont souscrit.

Il apparait donc que l'application ne peut pas présenter une page web statique, tout du moins comme page d'accueil, mais une page dynamiquement construite en fonction de l'instant auquel la requête est reçue et de l'utilisateur dont cette requête émane.

La page web est alors typiquement constituée d'une trame statique minimale et de références à des éléments qui sont dynamiquement incorporés à la page, afin de construire cette page web à la demande afin qu'elle puisse être produite sur l'interface homme-machine du navigateur de l'utilisateur.

Ces éléments peuvent notamment être déterminés par du code informatique (typiquement en langage Javascript) incorporé ou référencé dans la trame de la page web. Ce code informatique est prévu pour récupérer les éléments dynamiques dans des bases de données en fonction par exemple de paramètres contextuels (identifiant de l'utilisateur, heure courante, etc.) et de la logique implémentée par le code informatique.

Lorsqu'il reçoit une requête d'un client d'un utilisateur (terminal de télécommunication, ordinateur... hébergeant un navigateur web), le serveur hébergeant l'application web peut renvoyer la trame de page web, charge au client d'exécuter le code informatique et de déterminer puis télécharger les différents éléments constitutifs de la page web, afin de la produire sur l'écran du terminal.

Toutefois, une application de type « web TV » peut avoir une vocation commerciale. Il est alors souhaitable de l'adapter afin d'obtenir une visibilité la plus importante possible sur le Web. Cette visibilité passe par de bons référencements auprès des différents moteurs de recherche.

Dès lors le serveur hébergeant l'application web ne peut pas renvoyer seulement cette trame de page web et le code informatique car ils ne seraient pas correctement traités par les moteurs de recherche. Notamment, ces moteurs de recherche ne sont pas adaptés pour exécuter le code informatique et ne pourraient donc pas récupérer les différents éléments constitutifs de la page web. Ils ne pourraient alors pas prendre en compte le contenu de ces pages et donc ne pourraient pas les référencer correctement.

La page web doit donc être construire par le serveur et transmise aux clients, une fois construite, c'est-à-dire après intégration des différents éléments constitutifs, dynamiquement déterminés.

Ce type de fonctionnement est généralement appelé SSR pour « *Server Side Rendering* » en anglais (« rendu côté serveur » en français).

Il s'agit d'une technique utilisée dans le développement web qui consiste à employer des scripts sur un serveur web qui produit une réponse personnalisée pour chaque demande de l'utilisateur (client) sur le site web. Les scripts peuvent être écrits dans l'un des langages de script côté serveur disponibles (comme Javascript, PHP, Python...). Le SSR se distingue du rendu côté client, dans lesquels des scripts intégrés sont exécutés côté client dans un navigateur web, mais les deux techniques sont souvent utilisées conjointement. L'alternative à l'un ou l'autre type de script, ou aux deux, est que le serveur web lui-même fournisse une page web statique.

Cette technique fait donc reposer une charge importante sur le serveur qui doit être à même de construire les pages web à la volée pour chaque requête reçue d'un utilisateur. Classiquement, les serveurs sont dimensionnés pour faire face à la charge induite par ce fonctionnement. Toutefois, dans le contexte d'une application de type Web TV, ainsi que précédemment expliqué, le serveur doit faire face à une forte variabilité du nombre de requêtes au cours du temps et à des pics extrêmement importants.

Par exemple, avant un événement d'importance (discours du Président de le République, début d'un match d'une compétition sportive, annonce d'une catastrophe...), le serveur peut recevoir un nombre de requêtes plusieurs dizaines de fois plus élevées que le régime nominal (quelques minutes avant).

Dimensionner le serveur sur la base de ces pics de charge serait théoriquement possible, mais nécessiterait d'une part de prévoir l'intensité maximale de ces pics, et en outre de disposer de ressources beaucoup trop importantes pour le régime nominal. Dans la mesure où ces pics de charge peuvent être relativement exceptionnels ou en tout cas peu fréquent, ce surdimensionnement serait non optimal en termes de coûts pour l'exploitant du serveur et préjudiciable en termes écologiques. Le document Anonymous: "Increasing Application Performance with HTTP Cache Headers | Heroku Dev Center",, 24 décembre 2023 (2023-12-24), XP093191590,Extrait de l'Internet:URL:https:// web.archive.org/web/20231224155948/https://devcenter.heroku.com/articles/increasing-application-performance-with-http-cache-headers est considéré comme l'état de la technique le plus proche car il traite explicitement de l'amélioration des performances d'applications web par l'utilisation d'entêtes HTTP de cache.

Il existe donc un besoin d'améliorer les propositions actuelles de l'état de la technique.

Il convient donc de trouver d'autres solutions permettant d'améliorer l'expérience des utilisateurs de terminaux lors de l'allumage de ceux-ci, tout en minimisant l'impact énergétique.

### EXPOSÉ DE L'INVENTION

À ces fins, il est proposé un procédé d'accès par un client à un service web déployé sur un serveur à travers un réseau de télécommunication, ledit procédé étant décrit par la revendication 1.

De la sorte, une durée de cache peut être dynamiquement affectée en fonction d'au moins une mesure de trafic relatif au serveur. En particulier, cette durée de cache peut être affectée de sorte que le serveur soit moins sollicité lorsqu'il est en état de charge, afin de le soulager. La durée de cache peut, selon un mode de réalisation, être affectée à une valeur nulle ou minimal lorsque le serveur n'est pas chargée. On peut ainsi établir une balance optimisée entre la charge reposant sur les serveurs pouvant impacter l'expérience utilisateur et le besoin d'avoir une page demandée dans sa version la plus récente.

Suivant des modes de réalisation préférés, l'invention comprend une ou plusieurs des caractéristiques suivantes qui peuvent être utilisées séparément ou en combinaison partielle entre elles ou en combinaison totale entre elles :
- La durée de cache est plus élevée en cas de trafic élevé.
- La page demandée référence un ensemble d'éléments dits dynamiques nécessitant d'être dynamiquement déterminés, certains au moins desdits éléments dynamiques correspondant à des contenus audio-vidéo. Le procédé peut ainsi s'appliquer à la diffusion de contenu audio-vidéo, par exemple dans un réseau de type CDN.
- L'affectation comprend une comparaison entre la mesure et un seuil déterminé, et la durée correspond à une valeur par défaut lorsque la mesure est inférieure au seuil. Ainsi, avec une valeur par défaut à 0, le mécanisme de mise en cache peut n'être déclenché que lorsqu'une certaine charge est détectée, permettant aux utilisateurs d'accéder aux données les plus à jour dans le mode nominal de fonctionnement.
- La durée est proportionnelle à ladite mesure, ce qui permet une mise en œuvre simple du procédé proposé, mais d'autres modes de réalisation sont possibles, comme par exemple une durée établie selon des paliers déterminés par un ensemble de seuils auxquels ladite mesure est comparée.
- Ladite affectation comprend une incorporation d'une information relative à ladite durée dans un entête d'une réponse à ladite requête. Le procédé peut ainsi s'insérer dans les échanges protocolaires mis en place, sans ajouter de messages, et donc de trafic, supplémentaires.
- Cette information est insérée dans un champ « Cache-control » au sein d'une réponse conforme au protocole HTTP.
- Ladite affectation comprend une estimation d'une évolution de ladite mesure du trafic et une comparaison de ladite évolution avec un objectif pour déterminer ladite durée. Il est ainsi possible d'éviter, ou tout du moins de limiter, l'apparition des pics de trafic en réduisant les accès aux serveurs avant même l'apparition d'un pic.

Un autre aspect de l'invention concerne un serveur étant décrit par la revendication 8.

Un autre aspect de l'invention concerne un programme d'ordinateur comprenant des instructions de code qui, lorsqu'il est exécuté par un processeur d'un serveur réalise les étapes du procédé tel que précédemment décrit.

Un autre aspect de l'invention concerne un support de données sur lequel a été mémorisé au moins une série d'instructions de code de programme pour l'exécution d'un procédé tel que précédemment décrit.

D'autres caractéristiques et avantages de l'invention apparaîtront à la lecture de la description qui suit d'un mode de réalisation préféré de l'invention, donnée à titre d'exemple et en référence aux dessins annexés.

### BRÈVE DESCRIPTION DES DESSINS

D'autres Les dessins annexés illustrent l'invention :
- la figure 1 illustre un réseau de télécommunication permettant la mise en œuvre d'un procédé selon des modes de réalisation de l'invention ;
- la figure 2 schématise une architecture ;
- La figure 3 illustre un chronogramme selon un mode de réalisation de l'invention.

### EXPOSÉ DÉTAILLÉ DE MODES DE RÉALISATION PARTICULIERS

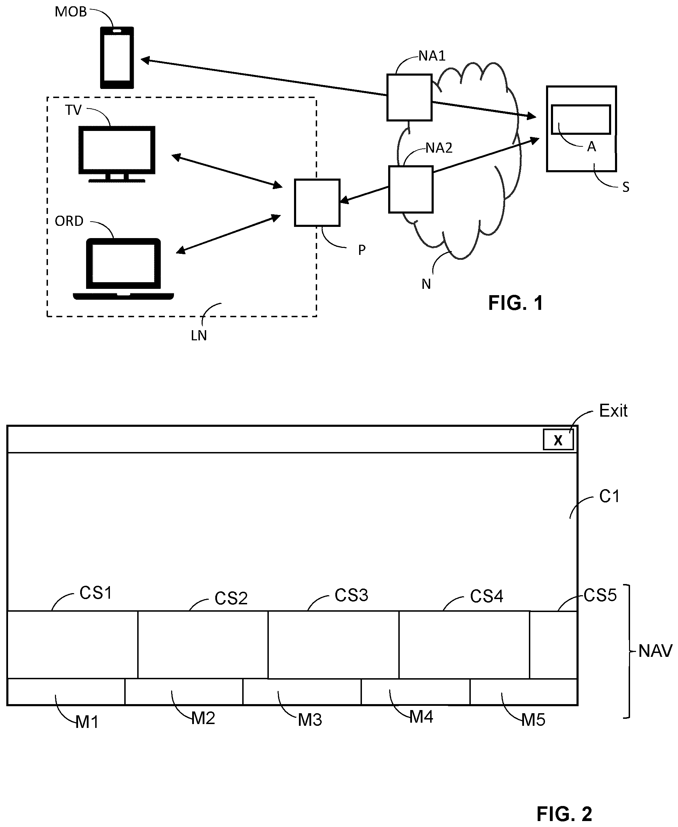

La figure 1 illustre un contexte de mise en œuvre d'un serveur S pouvant héberger une application web A.

Ce serveur S est accessible à des clients à travers un réseau de télécommunication N.

Ce réseau de télécommunication peut typiquement être composé de plusieurs réseaux interconnectés, notamment un réseau d'accès permettant aux clients de se connecter à un réseau principal (lui-même constitué d'une interconnexion de sous-réseaux) ou « *backbone* » en anglais.

Les clients peuvent être localement connectés à un réseau local, LN, par exemple un réseau local sans fil, leur permettant d'accéder à une passerelle P vers le réseau d'accès. Ce réseau local sans fil, communément appelé WLAN pour « Wireless Local Area Network » en anglais peut être conforme aux protocoles Wi-Fi, ou wifi, tels que spécifiés dans les documents normatifs de l'IEEE de la famille 802.11 (ou ISO/CEI 8802-11).

Le client peut accéder également directement au réseau d'accès, par exemple à un réseau cellulaire de troisième, quatrième, cinquième génération (3G/4G/5G) par exemple.

Les clients peuvent être de différentes natures, leur commun étant de disposer de moyens permettant la connexion au réseau. Il s'agit essentiellement de composants de radiocommunication et de composants électroniques et informatiques permettant la mise en œuvre des piles protocolaires nécessaires à la gestion des protocoles associés au réseau et à la réception et à l'émission de paquets de données.

Sur la figure 1, trois types de clients sont représentés : un ordinateur ORD, un terminal mobile de communication, MOB, et un téléviseur connecté TV.

Le terminal mobile MOB est typiquement un téléphone intelligent de type « *smartphone* » ou une tablette numérique.... L'ordinateur peut être un ordinateur fixe (ou « *desktop* » selon le vocabulaire en langue anglaise) ou portable (ou « *laptop* »).

Le téléviseur TV peut être nativement connecté ou l'être par le truchement d'un dispositif associé tel que par exemple une clé HDMI connecté au téléviseur.

Un exemple de dispositif externe communiquant avec un téléviseur TV est Chromecast. Le Chromecast est un appareil lecteur de flux multimédias (passerelle multimédia) en temps réel développé et commercialisé par Google. L'appareil se branche sur le port HDMI d'un téléviseur et communique, par connexion Wi-Fi, avec un autre appareil connecté à Internet (ordinateur, smartphone, tablette...), afin d'afficher sur le téléviseur le contenu multimédia reçu depuis une application compatible avec la technologie Google Cast, depuis le navigateur Google Chrome présent sur un ordinateur, ou depuis certains appareils Android.

Dans l'exemple illustratif de la figure 1, les clients ORD et TV peuvent accéder à l'application Web A via le réseau local LN et la passerelle P. Le client MOB accède à l'application web A directement à travers le réseau de télécommunication N.

Des nœuds d'accès NA1, NA2 permettent l'accès au réseau de télécommunication N, respectivement depuis un client mobile MOB ou depuis une passerelle P. Ces nœuds d'accès peuvent être de différents types et correspondre à différentes technologies d'accès à Internet, permettant à un client d'accéder à un serveur web distant.

Les deux types d'accès illustrés visent essentiellement à montrer la diversité des connexions possibles entre un client et l'application web A, mais ne sont aucunement limitatifs des différentes possibilités disponibles selon l'état de la technique et encore à venir.

Il est à noter que différents nœuds intermédiaires peuvent ainsi se trouver sur le chemin du trafic entre des clients et des serveurs web.

Les clients disposent d'outils logiciels adaptés pour permettre à l'utilisateur de se connecter à une application web et à visualiser un contenu transmis depuis cet application web. En particulier, dans le cas d'une application web de type « Web TV », l'outil logiciel (communément appelé « navigateur » ou « *web browser* » en anglais) est adapté pour permettre la production d'un contenu audio ou audio-vidéo sur une interface homme-machine associée au client (écran du client, écran externe connecté au client, etc.)

Les contenus audio ou audio-vidéos comprennent des contenus diffusés en direct qui peuvent être liés à des chaines de télévision, de radiodiffusion, etc. Il peut également s'agir de contenu à la demande (podcast, vidéo à la demande, VoD (« *video on demand* ») etc.).

L'application web A est prévue pour fournir, sur requête des clients, des pages web référençant différents éléments.

Ces éléments peuvent correspondre à des zones de la page web, dont le contenu peut être individuellement déterminé. Par exemple, dans le cas d'une application de type « web TV », les éléments peuvent correspondre à des chaînes, à des contenus vidéos particuliers, à des menus, à des espaces publicitaires, etc.

Les éléments peuvent être associés à la fois à une représentation visuelle ou graphique, et à un comportement, notamment lorsqu'il est pointé ou sélectionné par l'utilisateur.

Par exemple, un contenu vidéo peut être mis en surbrillance ou être animé différemment, lorsque l'utilisateur le pointe (par exemple au moyen d'une souris, ou d'une télécommande), et être déclenché en plein écran lorsqu'il est sélectionné.

La sélection d'autres éléments peut entraîner d'autres actions, comme par exemple l'ouverture d'une nouvelle page web.

En particulier, la première page, ou page d'accueil, peut être ainsi dynamiquement déterminée. L'application web peut également contenir des pages dynamiquement déterminées et des pages statiques (code HTML pur). Certaines pages peuvent également être un mix des deux, c'est-à-dire comporter des éléments statiques et des éléments à déterminer dynamiquement.

Comme indiqué précédemment, cette page peut être conforme à la technologie SSR.

Le rendu côté serveur, ou « *server side rendering* » (SSR) correspond au fonctionnement des sites web classiques : le navigateur envoie une requête au serveur, celui-ci traite l'information et renvoie une requête http contenant le HTML complet au navigateur, qui peut ensuite facilement effectuer le rendu.

Le rendu côté serveur, SSR, permet un meilleur respect des contraintes d'optimisation pour les moteurs de recherche, SEO (pour « *Search Engine Optimization* », en anglais).

Selon ce mécanisme, le serveur S construit une page dynamiquement lorsqu'il reçoit une requête d'un client à partir d'une trame statique et d'éléments référencés. Le serveur transmet au client une page complète en langage HTML (pour « *HyperText Markup Language* » en anglais) avec l'ensemble des balises permettant son bon référencement par les moteurs de recherche.

Ces éléments référencés (dits dynamiques) nécessitent d'être dynamiquement déterminés. Certains au moins correspondent à des contenus audio-vidéo.

La figure 2 illustre un exemple d'interface graphique pouvant être affiché par un écran associé à un client. Cette page d'exemple peut être une page d'accueil.

Elle peut correspondre à une page transmise par le serveur S en réponse à une requête du client, et construite dynamiquement selon le mécanisme de rendu côté serveur, SSR.

Cette interface graphique peut afficher, de façon concomitante, un contenu, ou flux, vidéo dans une zone C1, et une zone de navigation NAV permettant des interactions avec l'utilisateur du terminal et permettant notamment de changer le flux vidéo à afficher dans la zone C1.

La zone de navigation NAV comporte un ensemble de zones CS1, CS2, CS3, CS4, CS5 destinées à l'affichage de flux, ou contenus, vidéos secondaires. Ces contenus secondaires peuvent par exemple correspondre à d'autres chaînes de télévision.

La sélection d'une zone secondaire peut déclencher l'affichage du contenu vidéo secondaire dans la zone principale C1. Le contenu précédemment affiché dans cette zone principale C1 peut alors être affiché dans une zone secondaire. L'utilisateur peut ainsi zapper d'un contenu vidéo à un autre vidéo au moyen de cette interface graphique.

La zone de navigation peut également comporter des menus M1, M2, M3, M4, M5, permettant d'autres options de navigation, par exemple de changer de source de contenu multimédia : il peut par exemple s'agir de se connecter à un autre serveur de contenu SC, de récupérer des contenus multimédias stockés localement, etc.

L'interface graphique peut comporter d'autres éléments non représentés sur la figure : menus, déroulants ou autres, accessibles par exemple au moyen de la sélection d'un menu M1, M2, ML3, M4, M5, ou d'une touche d'une télécommande associée au terminal 10, etc. Ces éléments peuvent permettre d'accéder à encore d'autres options, par exemple à l'ensemble des chaînes de télévision disponible.

Comme précisé précédemment, des éléments de cette page peuvent être dynamiquement déterminés afin de refléter les différents contenus, notamment audio-vidéos, disponibles et accessibles à l'utilisateur en fonction de son profil et du temps (date et heure) actuel. La page web référence donc ces éléments qui doivent être déterminés dynamiquement, et que l'on appellera par la suite « éléments dynamiques ».

La page web peut par ailleurs comporter des éléments statiques, c'est-à-dire ne devant pas être dynamiquement déterminés. Ces éléments statiques ne dépendent pas de l'actualité ou de l'utilisateur : il peut s'agir d'informations générales, d'éléments graphiques de la page web toujours présents, de la feuille de style CSS, etc.

Selon un mode de réalisation, la page web peut être un canevas, ou une trame, comportant très peu d'éléments statiques et majoritairement constitué d'éléments devant être déterminés de façon dynamique (éléments dynamiques).

Le référencement d'éléments dans une page web peut être effectuée par tout moyen connu. Il s'agit typiquement de balises ou de mots-clés du langage HTML (« *HyperText Markup Language* » en anglais).

En particulier, le référencement d'un élément devant être dynamiquement déterminé peut se faire par des moyens techniques permettant de déclencher automatiquement cette détermination. Ces moyens techniques peuvent être des liens vers des ressources contenant du code informatique.

Ce code informatique peut être des scripts écrits dans l'un des langages de script côté serveur disponibles (comme Javascript, PHP, Python...).

Il est prévu pour récupérer les éléments dynamiques dans des bases de données en fonction par exemple de paramètres contextuels (identifiant de l'utilisateur, heure courante, etc.) et de la logique implémentée par le code informatique. En particulier, il peut être prévu pour récupérer les visuels d'une émission vidéo, d'une chaîne de télévision, d'un menu, ainsi que les actions associées (permettant notamment le déclenche du téléchargement du contenu multimédia associé depuis un serveur de contenu).

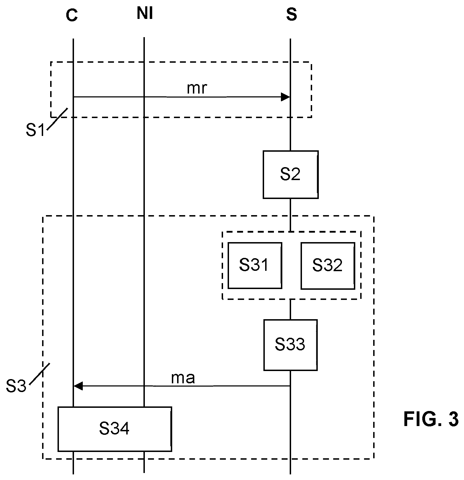

La figure 3 schématise un chronogramme selon un mode de réalisation de l'invention.

Dans une étape S1, le serveur S reçoit une requête mr désignant une page demandée.

Cette page peut typiquement être une page d'accueil d'un service web déployé sur le serveur S. Il peut par exemple s'agir d'une page d'accueil d'un portail d'accès à du contenu audio-visuel, construite dynamiquement, ainsi que précédemment expliqué en référence aux figures illustratives 1 et 2.

La requête peut être émise par un client C quelconque, et peut transiter via au moins un nœud intermédiaire NI, permettant l'acheminement des messages entre le client et le serveur S.

La requête mr peut être conforme au protocole HTTP (pour « *HyperText Transfer Protocol* » en anglais). Il peut notamment s'agir d'une requête GET de ce protocole HTTP.

Dans une étape S2, le serveur effectue, ou récupère, une mesure d'un trafic relative à ce serveur S.

Cette mesure peut concerner la charge du serveur S et donc sa capacité à pouvoir répondre aux requêtes visant la page concernée ou bien d'autres pages en général, selon une contrainte de temps (c'est-à-dire sans impacter significativement l'expérience des utilisateurs des clients C.).

Ainsi, cette étape S2 peut comprendre une surveillance d'un ou plusieurs critères de charge du serveur S.

Ces critères de charge peuvent comprendre
- un nombre de requêtes reçus dans une unité de temps ;
- un volume de données émises dans une unité de temps ;
- une charge du microprocesseur du serveur et/ou l'occupation de sa mémoire vive ;
- un nombre de clients transmettant des requêtes dans une unité de temps ;
- etc.

Un ou plusieurs critères peuvent être évalués et fournir une mesure mono ou multivaluée représentative de la charge du serveur (et donc de sa capacité à traiter les requêtes mr de façon satisfaisante pour les utilisateurs des clients C).

Dans une étape S3, le serveur S affecte, ou assigne, une durée de cache pour la page demandée en fonction de la mesure effectuée à l'étape précédente.

Cette durée de cache peut être associée à une réponse, ma, transmise par le serveur S et correspondant à la requête mr. Cette réponse ma correspond typiquement à la page demandée et désignée par la requête mr.

Ces nœuds intermédiaires peuvent être tout ou partie des nœuds par lesquels cette réponse ma est acheminée vers le client C.

Cette durée de cache peut être transmise indépendamment ou bien via ce message de réponse ma.

Selon un mode de réalisation, une information relative à cette durée est incorporée dans un entête de la réponse ma à la requête.

En particulier, cette information peut par exemple être insérée dans un champ « Cache-control » au sein d'une réponse ma conforme au protocole http.

« Cache-control » est un entête (ou champ d'entête) du protocole HTTP qui spécifie le comportement de mise en cache des modules logiciels interprétant les messages HTTP, notamment le navigateur du client C en charge de l'affichage de la page web demandée, mais aussi au moins certaines des nœuds intermédiaires. Ces nœuds intermédiaires particuliers disposent des moyens pour interpréter les messages http afin de mettre en cache des données et les réutiliser pour répondre à des requêtes de clients C.

Un entête « cache-control » contient un ensemble de paires clé/valeur(s). Eventuellement plusieurs valeurs peuvent être associées à une clé.

Une clé « max-age » permet de spécifier une durée de mise en cache. On peut donc y insérer une durée de cache en fonction de la mesure précédemment effectuée.

Une clé « public » permet de spécifier que des nœuds intermédiaires NI adaptés peuvent également mettre des données en cache (et non uniquement les clients C destinataires). Préférentiellement, cette clé « public » est également insérée afin de permettre une mise en cache de la page demandée sur ces nœuds intermédiaires.

Alternativement, l'information peut être insérée au sein de l'entête de la page web conforme au langage HTML. Par exemple un attribut « http-equiv= cache-control » peut être prévu pour contrôler le comportement de la mémoire cache par les applications interprétant la page web.

Ainsi, l'étape S3 permet d'affecter une durée de cache pour la page demandée aux moins à certains des équipements par lesquels la réponse ma est transmises, c'est-à-dire le client C et les équipements intermédiaires NI (pour rappel : tous les équipements intermédiaires ne sont pas nécessairement adaptés pour effectuer une mise en cache).

La durée de cache est déterminée en fonction d'une mesure de trafic relatif au serveur S.

En particulier, selon un mode de réalisation, cette étape S3 comprend un mécanisme réactif, S31, selon lequel la durée de cache est directement déterminée en fonction d'une mesure. Selon ce mode réactif, S31, la détection d'un pic de trafic peut ainsi directement provoquer l'augmentation d'une durée de cache afin de le juguler.

Selon un mode de réalisation, un mode anticipatif S32 peut également être mis en place, visant à déterminer un futur pic de trafic. Cette anticipation peut se baser sur la détection d'une augmentation progressive de la mesure du trafic, et/ou sur une régression à partir d'un historique de mesures de trafic, permettant de prédire une évolution du trafic.

En particulier, la durée de cache peut être déterminée afin de soulager le serveur S en cas de trafic élevé, en affectant une durée de cache élevée. En particulier, la durée de cache peut être plus élevée en cas de trafic élevé. Ainsi, les clients C utiliseront les données en cache correspondant à la page demandée et, pendant la durée de mise en cache, le serveur S ne sera pas sollicité.

En contrepartie, les utilisateurs du client C n'auront pas accès aux éventuelles mises à jour de la page demandée (celle-ci étant construite dynamiquement par le serveur S). Ils visualiseront donc une version potentiellement ancienne, en décalage avec les mises à jour effectuées sur le serveur S. Dans la mesure où les pics de trafic sont habituellement de courte durée, toutefois, le décalage ainsi provoqué d'une part ne dure pas et d'autre part n'est statistiquement pas très important. Il est ainsi considéré que cette dégradation de la qualité des données est acceptable à la vue du gain en performances apporté par la charge moindre du serveur S.

En dehors d'un pic de trafic, la valeur de la durée de mise en cache peut être faible, afin que chaque appel à la page web fasse l'objet d'une requête vers le serveur S, et que celui-ci construise dynamiquement cette page. Dans cette situation, les données concernant cette page et stockées dans les caches du client et/ou des nœuds intermédiaires NI ne seront utilisés que pendant une courte fenêtre temporelle (pouvant possiblement être réduite à zéro).

Selon un mode de réalisation, une règle peut être définie pour automatiquement déterminer la durée de cache à partir de la mesure de trafic. D'une façon générale, la durée de cache est plus élevée en cas de trafic élevé, et plus faible en cas de trafic faible. Autrement dit, la durée du cache est déterminée en fonction de la mesure du trafic selon une relation croissante.

Cette règle peut être une fonction, notamment une fonction croissante, par exemple linéaire. En particulier, cette durée peut être proportionnelle à la mesure.

On peut également établir la durée selon des paliers déterminés par un ensemble de seuils auxquels la mesure est comparée. Ce mode de réalisation sera plus particulièrement décrit ultérieurement à l'aide d'un exemple concret.

Selon un mode de réalisation, un mode réactif S31 comprend une comparaison entre la mesure et un seuil déterminé. La durée de cache peut alors correspondre à une valeur par défaut (basse) lorsque la mesure est inférieure audit seuil.

Lorsque la mesure est supérieure au seuil, la durée de cache peut correspondre à une seconde valeur par défaut, supérieure à la première. Ou bien, la durée de cache peut être déterminée par une fonction croissante dépendant de la mesure, ainsi qu'expliqué précédemment.

Dans le cas d'un mode anticipatif, S32, une estimation d'une évolution de la mesure de trafic peut être comparée avec un objectif afin de déterminer la durée de cache. Cet objectif peut être un seuil, mais également dépendre d'une distance temporelle à laquelle ce seuil peut être franchie : par exemple, un pic de trafic peut être détecté s'il est estimé que la mesure franchisse un seuil dans moins de X minutes.

Au fil du temps, le serveur peut être amené à modifier continument les durées de cache afin de s'adapter aux fluctuations du trafic. Ainsi, même dans le cas d'un mode anticipatif, les estimations peuvent continument revues, afin d'adapter la durée de cache aux conditions de trafic telles que mesurées.

Dans une étape S34, la durée de cache affectée par le serveur S est utilisée pour paramétrer différents équipements transmettant le message de réponse ma correspondant à la page demandée.

La durée de cache est ainsi utilisée pour au moins un équipement parmi le client C et un nœud intermédiaire NI reliant le client C et le serveur S.

Ces équipements (par exemple le client C et/ou au moins un nœud intermédiaire NI) peuvent mémoriser la page demandée et les éléments la composant dans une mémoire associée, durant une période correspondant à la durée de cache.

Lors de requêtes subséquentes, les équipements pourront, en fonction utiliser le contenu de la mémoire, pour directement répondre au client, si le contenu est toujours valable (c'est-à-dire dans la durée de cache), ou bien transmettre la requête vers le serveur S.

Il en est de même pour le client C qui, selon les mécanismes habituels, vérifie le contenu de sa propre mémoire avant de déclencher la transmission d'une requête au serveur S.

Un cas d'utilisation du procédé concerne les réseaux de distribution de contenu audio-vidéos connus sous l'acronyme CDN (pour « *Content Delivery Network* » en anglais). Dans un tel contexte, ainsi que précédemment décrit, les utilisateurs d'un service WebTV accèdent au service à travers sa page d'accueil. Cette page d'accueil est construite de manière dynamique par le serveur. La page contient du code HTML avec l'ensemble des balises et des métadonnées pour des besoin de SEO (optimisation du référencement par les moteurs de recherche). Le contenu de la page est dynamique et dépend des programmes en cours de diffusion (qui viennent de débuter, les plus regardés, ...) ainsi que des contenus en rediffusion ou à la demande (VOD pour « *Video On Demand* ») mis en avant (promotion contenus les plus regardés, ...).

Afin de rendre ce contenu le plus dynamique possible (les informations les plus à jour), dans la situation nominale, le serveur ne s'appuie pas sur la gestion du cache des nœuds du réseau CDN ou des navigateurs Web du client.

Pour cela le serveur positionne comme entête http des réponses le paramètre suivant : « Cache-Control: no-cache, no-store, must-revalidate »

Lors de pics de charge, le serveur est très fortement sollicité.

Afin de limiter l'impact de ces pics de charge, le serveur va positionner dynamiquement des entêtes de gestion du cache.

Comme précédemment décrit, la durée de mise en cache des données est ajustée dynamiquement dans le serveur de façon à ce que les informations exposées ne soient pas trop anciennes tout en assurant une charge serveur raisonnable. Plus la durée de mise en cache est importante et plus les données seront anciennes et le serveur déchargé. Plus la durée de mise en cache sera courte (voir nulle) et plus les données seront à jour et le serveur chargé.

La directive de gestion du cache est transmise par le serveur aux nœuds du CDN et également au navigateur du client par l'entête http de gestion du cache : « Cache-Control: public, max-age=xxx » avec xxx la durée de mise en cache en secondes.

La valeur de xxx peut donc varier de 1 à une valeur importante (30 par exemple). Le serveur en fonction de sa charge CPU peut donc positionner une valeur plus ou moins importante. Une règle possible serait :

| | |
|---|---|
| - Si charge CPU < 30% | Pas de cache |
| - Si charge CPU entre 30 et 50 % | Cache à 1 seconde |
| - Si charge CPU entre 30 et 40 % | Cache à 3 secondes |
| - Si charge CPU entre 50 et 60 % | Cache à 5 secondes |
| - Si charge CPU entre 60 et 70 % | Cache à 10 secondes |
| - Si charge CPU > 70% | Cache à 30 secondes |

Comme il a été vu précédemment, d'autres types de règles peuvent être envisagés, de même qu'une approche prédictive par exemple basée sur une régression de l'évolution de la charge.

Ainsi si la valeur est positionnée à 5, le serveur va construire un page pour un client, positionner le paramètre « max-age » à 5. La page HTML sera alors mise en cache dans les différents nœuds du CDN. Les utilisateurs suivants dans cette fenêtre de 5 secondes qui transitent par ce même CDN utiliseront alors directement la page en cache dans le nœud sans solliciter de ressource sur le serveur.

Bien entendu, la présente invention n'est pas limitée aux exemples et au mode de réalisation décrits et représentés, mais est défini par les revendications. Elle est notamment susceptible de nombreuses variantes accessibles à l'homme de l'art.

## Revendications

1. Procédé mis en œuvre par un serveur (S) pour l'accès par un client (C) à un service web déployé sur un serveur (S) à travers un réseau de télécommunication (N), ledit procédé comportant des étapes de :
réception (S1) d'une requête (mr) désignant une page demandée associée audit service web,
mesure (S2) dynamique d'un trafic relatif audit serveur, et,
affectation (S3) d'une durée de cache pour ladite page demandée en fonction de ladite mesure selon une relation croissante.

2. Procédé selon la revendication précédente, dans lequel ladite page demandée référence un ensemble d'éléments dits dynamiques nécessitant d'être dynamiquement déterminés, certains au moins desdits éléments dynamiques correspondant à des contenus audio-vidéo.

3. Procédé selon l'une des revendications précédentes, dans lequel ladite affectation (S3) comprend une comparaison (S31) entre ladite mesure et un seuil déterminé, et ladite durée correspond à une valeur par défaut lorsque ladite mesure est inférieure audit seuil.

4. Procédé selon l'une des revendications 1 à 3, dans lequel ladite durée est proportionnelle à ladite mesure.

5. Procédé selon l'une des revendications précédentes, dans lequel ladite affectation (S3) comprend une incorporation (S33) d'une information relative à ladite durée dans un entête d'une réponse (ma) à ladite requête.

6. Procédé selon la revendication précédente, dans lequel ladite information est insérée dans un champ « Cache-control » au sein d'une réponse conforme au protocole HTTP.

7. Procédé selon l'une des revendications, dans lequel ladite affectation (S3) comprend une estimation (S32) d'une évolution de ladite mesure du trafic et une comparaison de ladite évolution avec un objectif pour déterminer ladite durée.

8. Serveur (S) comportant au moins un processeur adapté pour déployer un service web et pour :
recevoir (51) une requête (mr) désignant une page demandée associée audit service web,
mesurer (S2) dynamiquement un trafic relatif audit serveur, et,
affecter (S3) une durée de cache pour ladite page demandée en fonction de ladite mesure selon une relation croissante.

9. Programme d'ordinateur apte à être mis en œuvre sur un serveur, le programme comprenant des instructions de code qui, lorsqu'il est exécuté par un processeur, réalise les étapes du procédé définie dans les revendications 1 à 7.

10. Support de données sur lequel a été mémorisé au moins une série d'instructions de code de programme pour l'exécution d'un procédé selon l'une des revendications 1 à 7.

## Patentansprüche

1. Verfahren, das von einem Server (S) ausgeführt wird, um einem Client (C) den Zugriff auf einen auf einem Server (S) bereitgestellten Webdienst über ein Telekommunikationsnetz (N) zu ermöglichen, wobei das Verfahren folgende Schritte aufweist:
Empfangen (S1) einer Anfrage (mr), die eine angeforderte Seite bezeichnet, die mit dem Webdienst verbunden ist,
dynamisches Messen (S2) eines Datenverkehrs in Bezug auf den Server und
Zuweisen (S3) einer Cache-Dauer für die angeforderte Seite in Abhängigkeit vom Messwert gemäß einer ansteigenden Beziehung.

2. Verfahren nach dem vorhergehenden Anspruch, wobei die angeforderte Seite auf eine Gruppe sogenannter dynamischer Elemente verweist, die dynamisch bestimmt werden müssen, wobei zumindest einige dieser dynamischen Elemente Audio- und Videoinhalten entsprechen.

3. Verfahren nach einem der vorhergehenden Ansprüche, wobei das Zuweisen (S3) einen Vergleich (S31) zwischen dem Messwert und einem festgelegten Schwellenwert enthält und die Dauer einem Standardwert entspricht, wenn der Messwert unterhalb des Schwellenwerts liegt.

4. Verfahren nach einem der Ansprüche 1 bis 3, wobei die Dauer proportional zum Messwert ist.

5. Verfahren nach einem der vorhergehenden Ansprüche, wobei das Zuweisen (S3) ein Einfügen (S33) einer Information bezüglich der Dauer in einen Header einer Antwort (ma) auf die Anfrage enthält.

6. Verfahren nach dem vorhergehenden Anspruch, wobei die Information in ein "Cache-Control"-Feld innerhalb einer dem HTTP-Protokoll entsprechenden Antwort eingefügt wird.

7. Verfahren nach einem der Ansprüche, wobei das Zuweisen (S3) eine Schätzung (S32) eines Verlaufs des Messwerts des Datenverkehrs und einen Vergleich dieses Verlaufs mit einem Zielwert zur Bestimmung der Dauer enthält.

8. Server (S) mit mindestens einem Prozessor, der dafür ausgelegt ist, einen Webdienst bereitzustellen und:
eine Anforderung (mr) zu empfangen (S1), die eine angeforderte Seite bezeichnet, die mit dem Webdienst verbunden ist,
den Datenverkehrs in Bezug auf den Server dynamisch zu messen (S2) und
eine Cache-Dauer für die angeforderte Seite in Abhängigkeit vom Messwert gemäß einer ansteigenden Beziehung zuzuweisen (S3).

9. Computerprogramm, das geeignet ist, auf einem Server eingesetzt zu werden, wobei das Programm Codeanweisungen enthält, die bei seiner Ausführung durch einen Prozessor die in einem der Ansprüche 1 bis 7 definierten Schritte des Verfahrens ausführen.

10. Datenträger, auf dem mindestens ein Satz von Programmcodebefehlen zur Durchführung eines Verfahrens nach einem der Ansprüche 1 bis 7 gespeichert ist.

## Claims

1. Method implemented by a server (S) for access by a client (C) to a web service deployed on a server (S) through a telecommunication network (N), said method comprising steps of:
receiving (S1) a request (mr) designating a requested page associated with said web service,
dynamically measuring (S2) traffic relating to said server, and
allocating (S3) a cache duration for said requested page depending on said measurement in an increasing relationship.

2. Method according to the preceding claim, wherein said requested page references a set of elements referred to as dynamic elements which need to be dynamically determined, at least some of said dynamic elements corresponding to audiovisual content.

3. Method according to one of the preceding claims, wherein said allocating (S3) comprises comparing (S31) said measurement and a determined threshold, and said duration corresponds to a default value when said measurement is lower than said threshold.

4. Method according to one of Claims 1 to 3, wherein said duration is proportional to said measurement.

5. Method according to one of the preceding claims, wherein said allocating (S3) comprises embedding (S33) information relating to said duration in a header of a response (ma) to said request.

6. Method according to the preceding claim, wherein said information is inserted into a cache control field within a response conforming to the HTTP protocol.

7. Method according to one of the claims, wherein said allocating (S3) comprises estimating (S32) a change in said measurement of the traffic and comparing said change with an objective to determine said duration.

8. Server (S) comprising at least one processor adapted to deploy a web service and to:
receive (S1) a request (mr) designating a requested page associated with said web service,
dynamically measure (S2) traffic relating to said server, and
allocate (S3) a cache duration for said requested page depending on said measurement in an increasing relationship.

9. Computer program which is able to be implemented on a server, the program comprising code instructions which, when it is executed by a processor, performs the steps of the method defined in Claims 1 to 7.

10. Data medium on which at least one series of program code instructions for executing a method according to one of Claims 1 to 7 has been stored.
